# EUROPÄISCHE PATENTANMELDUNG

(11) **EP 4 787 677 A1**
(43) Veröffentlichungstag der Anmeldung: **05.08.2026**
(21) Anmeldenummer: 25155509.0
(22) Anmeldetag: 03.02.2025
(51) Int. Cl.: H02K 5/20, H02K 5/24

(54) **LÜFTERHAUBE EINER DYNAMOELEKTRISCHEN MASCHINE MIT REDUZIERTER GERÄUSCHABGABE**

(71) Anmelder: Innomotics GmbH, 90441 Nürnberg (DE)
(72) Erfinder: Ballweg, Marion, 97494 Bundorf (DE)
(74) Vertreter: Michalski Hüttermann & Partner mbB

(57) **Zusammenfassung**

Die Erfindung betrifft eine Lüfterhaube (12) einer dynamoelektrischen Maschine (1),
wobei die Lüfterhaube (12) an einer Stirnseite der dynamoelektrischen Maschine (1) anbringbar ist, derart, dass sie einen Außenlüfter (11) abdeckt, um als Berührungsschutz und zur Führung einer über ein Lüftergitter (18) ansaugbaren Kühlluft (16) zu dienen,
wobei die Lüfterhaube (12) eine umfängliche geschlossene, insbesondere zylinderförmige Hülle (22) aufweist, die zur Stirnseite der dynamoelektrischen Maschine (1) hin offen ist und somit zumindest abschnittsweise die dynamoelektrische Maschine (1) umfängt, wobei die Lüfterhaube (12) auf der anderen Seite das Lüftungsgitter (18) aufweist, wobei zumindest abschnittsweise die Innenseite (14) der Hülle (22) Mittel aufweist, Moden zu reduzieren.

## Beschreibung

Die Erfindung betrifft eine Lüfterhaube einer dynamoelektrischen Maschine und eine dynamoelektrische Maschine mit einer derartigen Lüfterhaube.

Dynamoelektrische Maschinen erzeugen im Betriebe Verluste, die durch Lüfter abgeführt werden. Die Lüfter werden direkt an einer Stirnseite der dynamoelektrischen Maschine angebracht. Um u.a. einen Berührungsschutz des Lüfters im Betrieb der dynamoelektrischen Maschine zu gewährleisten, wird der Lüfter von einer Abdeckung, insbesondere von einer Lüfterhaube umfasst.

Insbesondere bei Umrichter gespeisten dynamoelektrischen Maschine werden diese bei verschiedenen Drehzahlen betreiben, was zu unterschiedlichsten Frequenzanregungen u.a. der Abdeckungen führt. Die Blechteile dieser Abdeckungen generieren dabei häufig laute, unerwünschte Geräusche im Maschinenbetrieb

Die bisher gängigsten konstruktiven Maßnahmen zur Geräuschreduzierung sind dabei Einfügen von Verrippungen in die Abdeckungen oder Anbringen von Dämmstoffen, wie Dämmmatten oder Schwerematten, Einbringen von Sicken, Kanten oder Verjüngungen in die Abdeckungen, Einsatz von Abdeckungen mit gleichmäßiger Lochverteilung oder Nutzung der Sandwichtechnik, bei der mehrere Schichten verklebt werden.

Die bisher bekannten Maßnahmen führen lediglich zu einer Geräuschreduzierung, d.h. das Geräusch ist bereits "entstanden" und wird nur noch in seinen Auswirkungen bedämpft. Des Weiteren bedingen die bisher bekannten Maßnahmen entweder eine Geometrieänderung der Abdeckung oder beeinflussen die geometrischen Abmessungen sowie die Handhabung der Maschine.

Ausgehend davon liegt der Erfindung die Aufgabe zugrunde Abdeckungen, insbesondere eine Lüfterhaube einer dynamoelektrischen Maschine zu schaffen, die neben einer Geräuschreduzierung auch verringerte Geräuschemissionen verursacht.

Die Lösung der gestellten Aufgabe gelingt durch die Merkmale der unabhängigen Ansprüche.

Vorteilhafte Ausgestaltungen sind den abhängigen Ansprüchen zu entnehmen.

Eine Abdeckung, insbesondere eine Lüfterhaube ist an einer Stirnseite der dynamoelektrischen Maschine auf einer B-Seite anbringbar, derart, dass sie einen Außenlüfter abdeckt. Der Außenlüfter kann als Radial- oder Axiallüfter ausgebildet sein. Er kann ebenso als Eigenlüfter oder Fremdlüfter fungieren. In jedem Fall muss Berührungsschutz der Lüfter im Betreib der dynamoelektrischen Maschine gegeben sein. Des Weiteren soll die Abdeckung zur Führung einer über ein Lüftergitter ansaugbaren Kühlluft dienen.

Die Abdeckung, insbesondere Lüfterhaube der dynamoelektrischen Maschine dient also zur, des wie immer ausgeführten Außenlüfters als Berührungsschutz und zur Führung der über ein Lüftergitter angesaugten Kühlluft. Die Lüfterhaube ist an einer Stirnseite der dynamoelektrischen Maschine, vorzugsweise der B-Seite angebracht. Die Lüfterhaube ist topfähnlich gestaltet, wobei am "Topfboden" ein Lüftungsgitter vorhanden ist, während die "Topfwände" eine umfängliche geschlossene Hülle aufweisen, die insbesondere zylinderförmig ausgeführt ist.

Die umfänglich geschlossene, insbesondere zylinderförmige Hülle ist zur Stirnseite der dynamoelektrischen Maschine hin offen und umfängt somit zumindest abschnittsweise die dynamoelektrische Maschine.

Dabei ist eine Mode eine Schwingungsmode, die auf der Abdeckung, insbesondere der Lüfterhaube bei einer Anregung eine Partialschwingung darstellt. Die dort ausgebildeten Wellen sind also Summen verschiedener Moden. Die Moden unterscheiden sich in der räumlichen Verteilung der Intensität auf der Abdeckung, insbesondere der Lüfterhaube. Die Form der Moden wird durch die Randbedingungen der Abdeckung, wie Material, Dicke etc. bestimmt, unter denen sich die Welle ausbreitet. Durch die Moden wird die Geräuschabstrahlung der Abdeckung beeinflusst, weil bestimmte Töne besonders hervortreten und auf der Abdeckung eine ungleichförmige Energieverteilung verursachen. Eine bestimmte Resonanzfrequenzverteilung ist eine physikalische Eigenschaft der jeweiligen Abdeckung, die u.a. von seinen Abmessungen abhängt. Lediglich bestimmte Frequenzen_werden angeregt. Die Amplitude einer akustischen Mode hängt auch von der Position auf der Abdeckung ab.

Die Innenseite der Hülle der Lüfterhaube wird mit einem oder mehreren Modenblechen, die gezielte Ausstanzungen aufweisen gezielt und zumindest abschnittsweise ausgekleidet. Damit können auch einzelne Modenbleche radial überlappen.

Dies Ausstanzungen, Löcher etc. werden lokal in Abhängigkeit z.B. der Lüfter und/oder der Materialdicke der Hülle der Lüfterhaube und/oder des angestrebten Drehzahlbereichs der dynamoelektrischen Maschine in dem Modenblech vorgesehen. Die Platzierung des Modenblechs in der Hülle ist dann positionsgenau vorzunehmen.

Die Modenbleche können gestanzt oder per 3-Druck hergestellt werden. Sie werden dann in vorgebbare Abschnitte der Innenseite der Hülle der Lüfterhaube eingeklebt.

In einer weiteren Ausführung wird dereits die Abdeckung, insbesondere die Lüfterhaube bereits im 3-D-Druck-Verfahren hergestellt, sodass die Moden berits in diesem einstückigen Teil enthalten sind.

Durch die gezielte lokale Beeinflussung der Steifigkeit des Abdeckbleches bzw. Lüfterhaube verändert wird damit erfindungsgemäß Einfluss auf die Modenform und damit auf die Akustik und/oder Geräuschabgabe des Bleches der Lüfterhaube genommen. Die Anzahl, Geometrie und Lage der Ausstanzungen ist so zu wählen, dass die Steifigkeitsänderung in Dickenrichtung die geräuschverursachende Schwingform unterdrückt.

Erfindungsgemäß weist nunmehr eine derartige Abdeckung bzw. eine derartige Lüfterhaube folgende Vorteile auf:
Durch die Wahl der Lage, Größe und Form der Ausstanzungen lassen sich gezielte Beeinflussungen der Moden und damit eine Vermeidung und Reduzierung der im Betrieb der dynamoelektrischen Maschine verursachten Geräusche erzielen.

Die Modenbleche sind bei Maschinen, die akustisch "auffällig" sind, nach dementsprechender akustischer Analyse nachgerüstet werden.

Vor allem bei Lüfterhauben oder Lüfterabdeckungen wird der Luftstrom durch die Modenbleche nur unwesentlich beeinflusst.

Die Wandstärke der Abdeckung bzw. Lüfterhaube wird durch Einsetzen der Modenbleche lediglich gering erhöht. Das Design der Abdeckung verändert sich somit nicht.

Durch das Einbringen der Modenbleche in die bestehende Abdeckung oder Lüfterhaube bleibt die Schutzfunktion der Abdeckung vor Verschmutzungen oder Berührungen vollständig erhalten.

Durch geschickte Wahl und/oder Positionierung des Klebers zwischen Innenseite der Hülle und des Modenblechs lässt sich zusätzlich eine Dämpfung der Moden erreichen. Dabei ist ein flächiger und gleichmäßiger Kontakt anzustreben.

Bei dem aufeinander Kleben zweier Bleche ohne Ausstanzungen werden die geräuschverursachenden Schwingformen nur in eine andere Frequenz verschoben. Ein Verschieben in eine andere Frequenz führt aber bei variabler Drehzahl der dynamoelektrsichen Maschine zu dem gleichen Geräuschproblem lediglich in einer anderen Drehzahl führen.

Deswegen ist bereits ein Unterdrücken der Schwingform wichtig, die wie oben bereits ausgeführt durch lokale Steifigkeitsänderung in Dickenrichtung des Bleches der Abdeckung oder der Lüfterhaube erreicht.

Durch eine derartige Lüfterhaube kann der Betrieb einer dynamoelektrischen Maschine vor allem im drehzahlvariablen Umrichterbetrieb bei Pumpen, Lüfterantrieben und Verdichtern effizient die auftretenden Geräuschemissionen vermeiden.

Die Erfindung sowie weitere vorteilhafte Ausgestaltungen der Erfindung werden anhand prinzipiell dargestellter Ausführungsbeispiele näher erläutert, darin zeigen:
- FIG 1: prinzipieller Längsschnitt eines Reluktanzsynchronmotors,
- FIG 2: perspektivische Darstllung einer erfindungsgemäßen Lüfterhaube.

Es sei angemerkt, dass sich Begriffe wie "axial", "radial", "tangential" etc. auf die in der jeweiligen Figur bzw. im jeweils beschriebenen Beispiel zum Einsatz kommende Achse 10 beziehen. Mit anderen Worten beziehen sich die Richtungen axial, radial, tangential stets auf eine Achse 10 des Rotors 15 und damit auf die entsprechende Symmetrieachse des Stators 2. Dabei beschreibt "axial" eine Richtung parallel zur Achse 10, "radial" beschreibt eine Richtung orthogonal zur Achse 10, auf diese zu oder auch von ihr weg, und "tangential" ist eine Richtung, die in konstantem radialem Abstand zur Achse 10 und bei konstanter Axialposition kreisförmig um die Achse 10 herum gerichtet ist. Der Ausdruck "in Umfangsrichtung" ist mit "tangential" gleichzusetzen.

In Bezug auf eine Fläche, bspw. eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Unter dem Ausdruck "koaxiale Bauteile", bspw. koaxiale Komponenten wie Rotor 15 und Stator 2, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse ggf. an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine Komponente vorzugsweise vollständig in der zu ihr komplementären Komponente angeordnet werden kann, so dass sich die innere Oberfläche der einen Komponente und die äußere Oberfläche der anderen Komponente idealerweise lückenlos bzw. vollflächig berühren. Konsequenterweise ist also im Falle von zwei zueinander komplementären Gegenständen die äußere Form des einen Gegenstandes durch die äußere Form des anderen Gegenstandes festgelegt. Der Begriff "komplementär" könnte durch den Begriff "invers" ersetzt werden.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

Gleiche Bezugszeichen haben in den Figuren die gleiche Bedeutung.

Die beschriebenen Ausführungen im allgemeinen Beschreibungsteil als auch in der konkreten Figurenbeschreibung können beliebig kombiniert werden. Ebenso sind auch die dort erwähnten Einzelmerkmale der jeweiligen Ausführungen kombinierbar, ohne das Wesen der Erfindung zu verlassen.

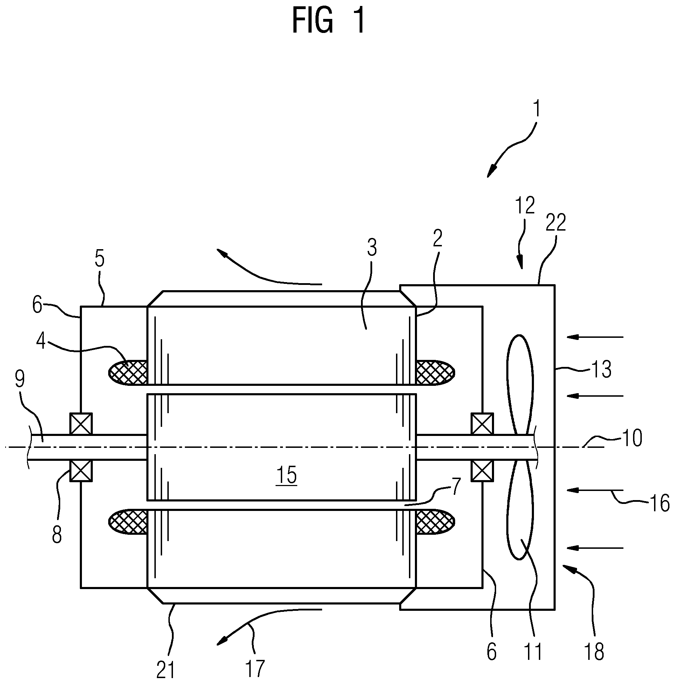

FIG 1 zeigt in einer prinzipiellen Längsdarstellung eine dynamoelektrische Maschine 1, in diesem Fall eine Reluktanz-Synchronmaschine. Diese Synchronmaschine weist einen Stator 2 auf, der in nicht näher dargestellten Nuten ein Wicklungssystem 4 aufweist, das an den Stirnseiten des Stators 2 einen Wickelkopf ausbildet. Durch elektromagnetische Wechselwirkung über einen Luftspalt 7 wird durch ein bestromtes Wicklungssystem 4 ein Reluktanzrotor 15 in Rotation um eine Achse 10 versetzt. Der Reluktanzrotor 3 ist koaxial zum Stator 2 angeordnet. Die Bleche des Reluktanzrotor 3 sind als Blechpaket paketiert und mit einer Welle 9 drehfest verbunden, die über Lager 8 und deren Lagerschilden 6 in einem Gehäuse 5 drehbar gehalten ist.

Der Rotor 15 kann ebenso als Rotor einer Asynchronmaschine oder einer permanenterregten Synchronmaschine ausgebldet sein, wobei sich das Wicklungssystem 4 des Stators 2 dieses Reluktanzmotors nicht wesentlich oder gar nicht ändert.

Bei diesen Reluktanzmaschinen 1 wird nunmehr von dem Stator 2 ein magnetisches Wechselfeld erzeugt, durch welches der Reluktanzrotor 15 im Wesentlichen infolge der Reluktanzkraft angetrieben wird. Sowohl der Reluktanzrotor 15 als auch der Stator 2 weisen üblicherweise Blechpakete 3 aus axial geschichteten Blechen auf, die voneinander vorzugsweise durch einseitige Lackschichten isoliert sind. Die Bleche bestehen aus Material mit hoher magnetischer Permeabilität, z. B. Elektroblech. Des weiteren ist jedes Rotorblech des Reluktanzrotors 15 in sich strukturiert und weist eine Anzahl von Aussparungen auf, die dazu dienen, den Verlauf des Magnetfelds zu beeinflussen. Die Aussparungen werden als nicht-flussführende oder nichtmagnetflussleitende Bereiche (Flusssperre) bezeichnet, während die Rotorbleche flussführende oder magnetflussleitende Bereiche (Flussleitbereiche) darstellen.

In der Reluktanztechnik wird der magnetische Fluss direkt ohne Dämpfung des Stators 2 über den Luftspalt 7 in den Reluktanzrotor 15 geführt. Aufgrund der Wirkungsgrad- und Leistungsgradanforderungen wird der Luftspalt 7 zwischen Stator 2 und Reluktanzrotor 15 in seiner radialen Ausdehnung geringer ausgeführt als bei einem Asynchronmotor, womit die drehmomentbildenden Kräfte und damit auch die Schwingungsneigung wesentlich höher sind.

Jede dynamoelektrische Maschine 1 erzeugt im Betriebe Verluste, die, um einen ordnungsgemäßen Betrieb aufrecht zu erhalten, abgeführt werden müssen. Dies wird im vorliegenden Fall durch einen Außenlüfter 11 gewährleistet, der als Radial- oder Axiallüfter ausgebildet sein kann. Dieser Außenlüfter 11 ist an einer Stirnseite der dynamoelektrischen Maschine 1 angebracht. In dieser Ausführungsform ist der Außenlüfter 11 als Eigenlüfter ausgebildet der direkt mit der Welle 9 gekoppelt ist. Ebenso ist es möglich den Außenlüfter 11 als Fremdlüfter auszuführen.

Bei einer dynamoelektrischen Maschine 1, wie einem Motor gibt es eine A-Seite (Abtriebsseite), deren eines Wellenende zu Wellenanbauelementen, wie Abtriebselementen und/oder einer Arbeitsmaschine weist und mit dieser Arbeitsmaschine mechanisch gekoppelt wird.

Als A-seitiges Abtriebselement einer dynamoelektrischen Maschine 1, wird eine Riemenscheibe, eine Kupplung, oder ein Zahnrad verstanden. Als Arbeitsmaschine wird z.B. eine Pumpe oder ein Verdichter bezeichnet.

Die B-Seite der dynamoelektrischen Maschine 1 ist am anderen Wellenende und ist den Wellenanbauelementen abgewandt. Dort ist der Außenlüfter 11 und die Lüfterhaube 12 angebracht.

Über den Außenlüfter 11 stülpt sich eine Lüfterhaube 12, die sich zumindest teilweise auch noch axial über das Gehäuse 5 erstreckt und mit dort optional vorhandenen Kühlrippen 21 des Gehäuses 5 zur Kühlung der Maschine 1 dient. Die Lüfterhaube 12 dient im positionierten Zustand an der Maschine 1 als Berührungsschutz des Außenlüfters 11 und zur Führung einer über ein Lüftungsgitter 18 der Lüfterhaube ansaugbaren Kühlluft 16. Die Lüfterhaube 11 ist in diesen Fall prinzipiell als zylindrische Hülle 22 mit einem - auf der dem Motor abgewandten Seite positionierten - Lüftungsgitter 18 ausgeführt.

Die angesaugte Kühlluft 16 tritt über das Lüftungsgitter 18 in die Lüfterhaube 12 ein und wird dort mittels des Außenlüfters 11 entlang des Lagers 8, des Lagerschildes 6 und der Innenseite 14 der Lüfterhaube 12 und über das Gehäuse 5 und/oder Kühlrippen 21 als erwärmte Luft 17 an die Umgebung abgegeben.

Aufgrund eines drehzahlvariablen Betriebs der dynamoelektrischen Maschine 1 aufgrund des Betriebs mit einem Umrichter, stellen sich an der Lüfterhaube 12 verschiedenste störende Schwingungsformen ein.

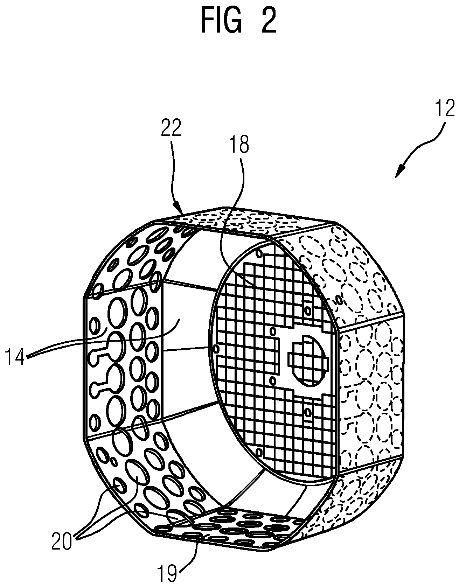

FIG 2 zeigt in perspektivischer Darstellung eine Lüfterhaube 12, die an einer Stirnseite der dynamoelektrische Maschine 1 gemäß FIG 1 anbringbar ist. Die Hülle 22 ist dabei achteckig ausgeführt und weist in Richtung Lüftungsgitter 18 einen aus strömungstechnischen Gesichtspunkten günstigen konischen Verlauf auf.

Wenn die Schwingform "nur" an der 8-eckigen Geometrie der Hülle 22 der Lüfterhaube 12 auftritt, ist auch nur in diesem Bereich das Modenblech 19 oder die Modenbleche 19 vorzusehen.

Sowohl die axiale und/oder umfängliche und/oder radiale Ausdehnung der Modenbleche 19 ist abhängig von der Schwingform, die unterdrückt werden soll.

Die Innenseite 14 der Hülle 22 der Lüfterhaube 12 wird mit einem oder mehreren Modenblechen 19, die vorgebbare Ausstanzungen 20 aufweisen gezielt und zumindest abschnittsweise ausgekleidet. Damit können sich auch einzelne Modenbleche 19 auf der Innenseite 14 der Hülle 22 radial überlappen.

Dies Ausstanzungen 20, Löcher etc. werden lokal in Abhängigkeit z.B. der Lüfter und/oder der Materialdicke der Hülle 22 der Lüfterhaube 12 und/oder des angestrebten Drehzahlbereichs der dynamoelektrischen Maschine 1 in dem Modenblech 19 vorgesehen. Die Platzierung des Modenblechs 19 in der Hülle 22 ist dann mittels einem gezielten Kleberverfahren positionsgenau vorzunehmen.

Die Modenbleche 19 können vorzugsweise basierend auf einer akustischen Analyse gestanzt oder per 3-Druck hergestellt werden. Sie werden dann in vorgebbare Abschnitte der Innenseite 14 der Hülle 22 der Lüfterhaube 12 eingeklebt.

Als Alternative zum Einkleben der Modenbleche 19 kann die Lüfterhaube 12 im 3-D-Druck-Verfahren hergestellt werden, sodass die Modenunterdrückung bereits in diesem einstückigen Teil enthalten sind.

Durch die gezielte lokale Beeinflussung der Steifigkeit des Abdeckbleches bzw. Lüfterhaube 12 wird die Steifigkeit verändert damit erfindungsgemäß Einfluss auf die Modenform und deren Anzahl und damit auf die Akustik und/oder Geräuschabgabe des Bleches der Lüfterhaube 12 genommen. Die Anzahl, Geometrie und Lage der Ausstanzungen 20 ist so zu wählen, dass die Steifigkeitsänderung in Dickenrichtung die geräuschverursachende Schwingform unterdrückt.

Die Erfindung eignet sich, allgemein gesprochen auch zur gezielten Beeinflussung der Schallabstrahlung von dementsprechend angeregten Blechbauteilen.

### Bezugszeichenliste

- 1: dynamoelektrische Maschine
- 2: Stator
- 3: Blechpaket
- 4: Wicklungssystem
- 5: Gehäuse
- 6: Lagerschild
- 7: Luftspalt
- 8: Lager
- 9: Welle
- 10: Achse
- 11: Lüfter
- 12: Lüfterhaube
- 13: Lufteinlass
- 14: Innenseite
- 15: Rotor
- 16: anströmende Kühlluft
- 17: erwärmte Luft
- 18: Lüftungsgitter
- 19: Modenblech
- 20: Ausstanzungen
- 21: Kühlrippen
- 22: Hülle

## Patentansprüche

1. Lüfterhaube (12) einer dynamoelektrischen Maschine (1),
wobei die Lüfterhaube (12) an einer Stirnseite der dynamoelektrischen Maschine (1) anbringbar ist, derart, dass sie einen Außenlüfter (11) abdeckt, um als Berührungsschutz und zur Führung einer über ein Lüftergitter (18) ansaugbaren Kühlluft (16) zu dienen,
wobei die Lüfterhaube (12) eine umfängliche geschlossene, insbesondere zylinderförmige Hülle (22) aufweist, die zur Stirnseite der dynamoelektrischen Maschine (1) hin offen ist und somit zumindest abschnittsweise die dynamoelektrische Maschine (1) umfängt, wobei die Lüfterhaube (12) auf der anderen Seite das Lüftungsgitter (18) aufweist, wobei zumindest abschnittsweise die Innenseite (14) der Hülle (22) Mittel aufweist, Moden zu reduzieren.

2. Lüfterhaube (12) nach Anspruch 1, **dadurch gekennzeichnet, dass** die Innenseite (14) der Hülle (22) ein Modenblech (19) mit in Abhängigkeit z.B. des Lüfters (11) und/oder der Materialdicke der Hülle (22) der Lüfterhaube (12) und/der des Drehzahlbereichs der dynamoelektrischen Maschine (1) gezielt gewählte Ausstanzungen(20)aufweist.

3. Lüfterhaube (12) nach Anspruch 2, **dadurch gekennzeichnet, dass** das oder die Modenbleche (19) in vorgebbare Abschnitte auf der Innenseite (14) der Hülle (22) eingeklebt werden.

4. Lüfterhaube (12) nach Anspruch 1, **dadurch gekennzeichnet, dass** die Lüfterhaube (12) mittels eines 3-Druck-Verfahrens in Abhängigkeit z.B. des Lüfters (11) und/oder der Materialdicke der Hülle (22) der Lüfterhaube (12) und/der des Drehzahlbereichs der dynamoelektrischen Maschine (1) gezielt gewählte lokale Steifigkeiten in die Lüfterhaube (12) einbringt. aufweist oder einkleben eines modifizierten Blechs in vorgebbare Abschnitte der Mantelinnenseite der Lüfterhaube.

5. Dynamoelektrische Maschine (1) mit einer Lüfterhaube (12) nach einem der vorhergehenden Ansprüche, **dadurch gekennzeichnet, dass** die Lüfterhaube (12) auf der B-Seite angeordnet ist und zumindest teilweise die Maschine (1) umfasst.
